# EUROPEAN PATENT SPECIFICATION

(11) **EP 0 395 597 B1**
(45) Date of publication and mention of the grant of the patent: **10.11.1993**
(21) Application number: 90830171.6
(22) Date of filing: 19.04.1990
(51) Int. Cl.: H02K 11/00

(54) **Supporting disk for the rotating diodes of an exciter alternator**
Trägerscheibe für die umlaufenden Dioden einer Wechselstromerregermaschine
Disque de support pour les diodes rotatives d'un alternateur excitateur

(30) Priority: 28.04.1989 IT 1248089
(43) Date of publication of application: 31.10.1990
(73) Proprietor: ANSALDO GIE S.R.L., I-16152 Genova (IT)
(72) Inventor: Seru, Fulvio, I-16127 Genoa (IT); Silei, Marco, I-16136 Genoa (IT); Tortello, Enzo, I-16127 Genoa (IT); Vallebella, Enrico, I-16147 Genoa (IT)
(74) Representative: Perani, Aurelio

(56) References cited:
- US-A- 3 354 330

## Description

The subject-matter of this invention consists of a supporting disk for the rotating diodes of an exciter alternator.

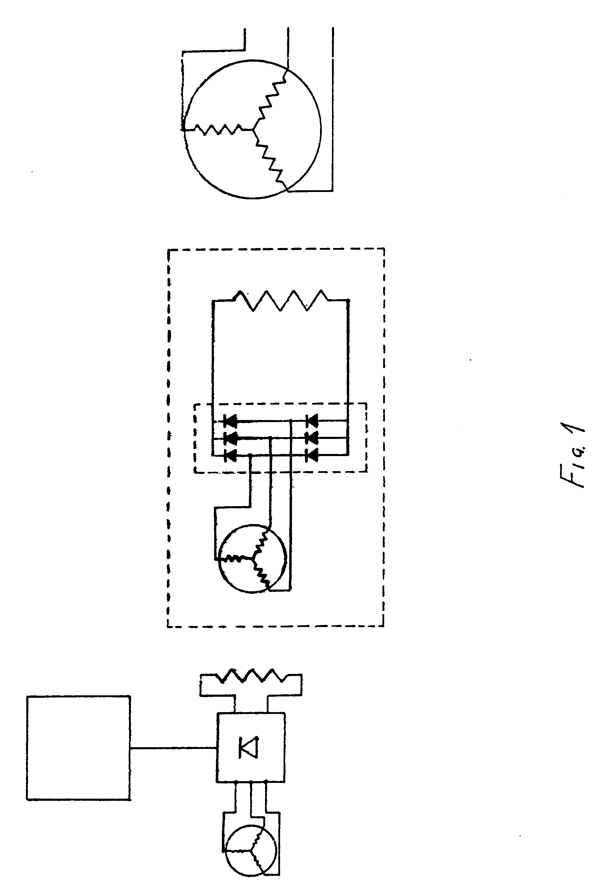

It is known that a so-called "brushless" excitation system consists of (figure 1):
- an alternating-current generator of the synchronous type, with a fixed inductor and a rotating armature;
- a voltage regulator;
- an auxiliary exciter alternator (in the classical version).

As shown in the diagram in figure 1, the use of an auxiliary exciter on the same axis as the main machine allows part of the mechanical power available on the shaft of the unit to be converted directly into excitation power. The current generated by the exciter alternator (alternating current) is transferred to the rectifier bridge and from there, once it has been transformed into a direct-current voltage, directly to the field of the main machine, by means of suitable connections, with no need for slip rings or brushes, and therefore with no points of interruption. This known classical solution offers many advantages, above all, maintenance is extremely limited due to the absence of brushes.

The rectifier bridge is usually of the three-phase full-wave type, with one or more parallel diodes, depending on the excitation power required and the degree of redundancy desired. In the event of several parallel diodes, with a working stand-by, it is necessary to use fuses, the purpose of which is to cut out failed diodes, but this increases the complexity and weight of the rotating parts. The diodes are secured to light-alloy dissipators, suitably finned to increase the effectiveness of the heat exchange; the supporting structure often consists of an actual armoured hood made of steel, shrunk onto the shaft.

The rotating rectifier bridge assembly has three functions to perform:
- converting the power from alternating to direct current (by means of diodes, fuses and connections);
- disposing of the heat caused by the electrical and ventilating friction losses (mainly by means of dissipators provided for this purpose);
- acting as a mechanical support (generally hood-type elements).

The dissipators may also be for conducting electricity. The classical version, in which the three functions stated above (heat dissipation, mechanical support and conduction of electricity) are taken care of by different components, has been greatly simplified by the introduction of disks which perform all three functions.

These known disks, however, require the use of additional mechanical elements to support the diodes, and this complicates the assembly and disassembly operations, as well as increasing the cost of construction due to the multiplicity of the components involved.

The purpose of this invention is to overcome this drawback by means of disks equipped with suitable axial openings made in the circular external rim of each disk, which are therefore sealed off in a radial direction.

The invention is defined in claims and is described in detail below, with specific reference to the attached drawings, in which:
- figure 1 is a functional diagram of a rotating-diode exciter alternator, already illustrated in the introductory part of the description;
- figure 2 shows an axial cross-section of a rotating-diode exciter alternator equipped with supporting disks according to the invention;

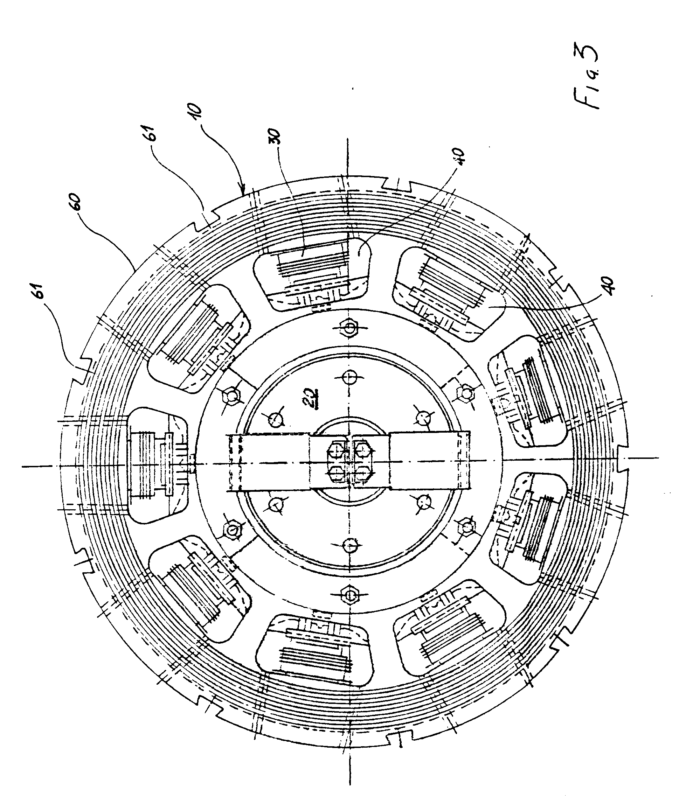

- figure 3 is a front view of one of the disks according to the invention;

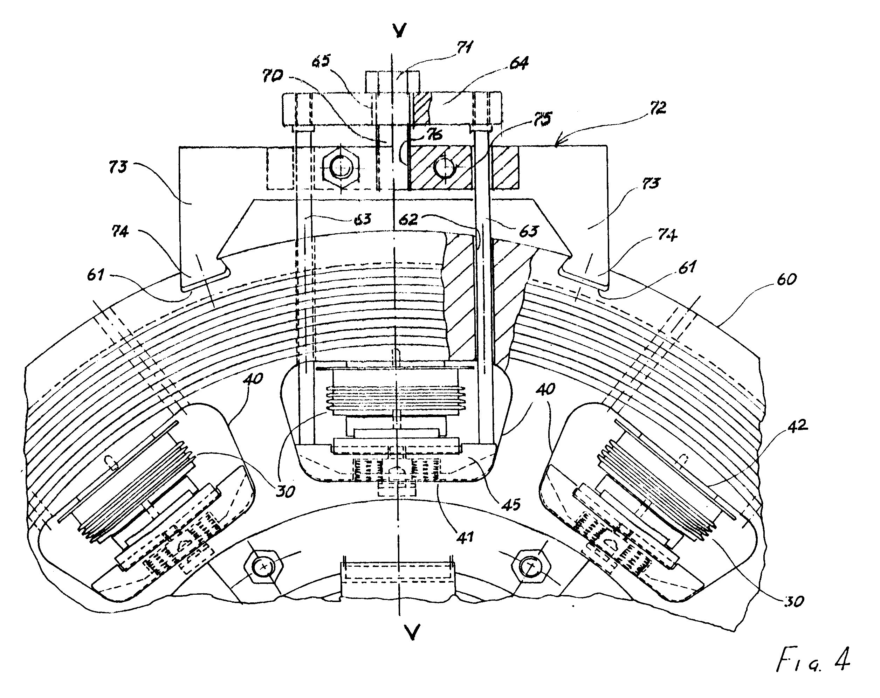

- figure 4 is a partial enlargement of figure 3, with the addition of the tool envisaged by the invention for the assembly and disassembly of the rotating diodes;

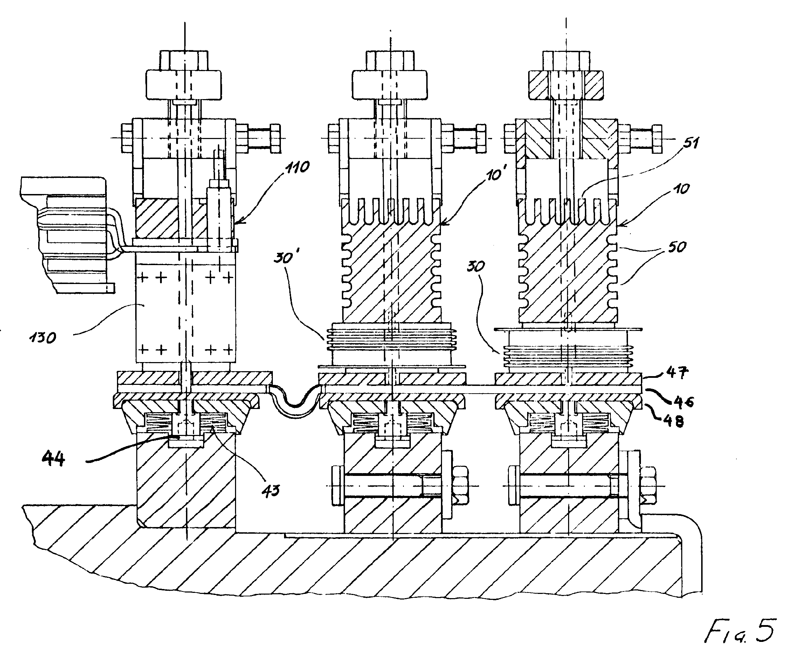

- figure 5 is a cross-section on the plane V-V of figure 4, and is therefore a partial enlargement of figure 2, again with the addition of the tool envisaged by the invention for the assembly and disassembly of the rotating diodes.

The diagram of figure 1 requires no further explanation.

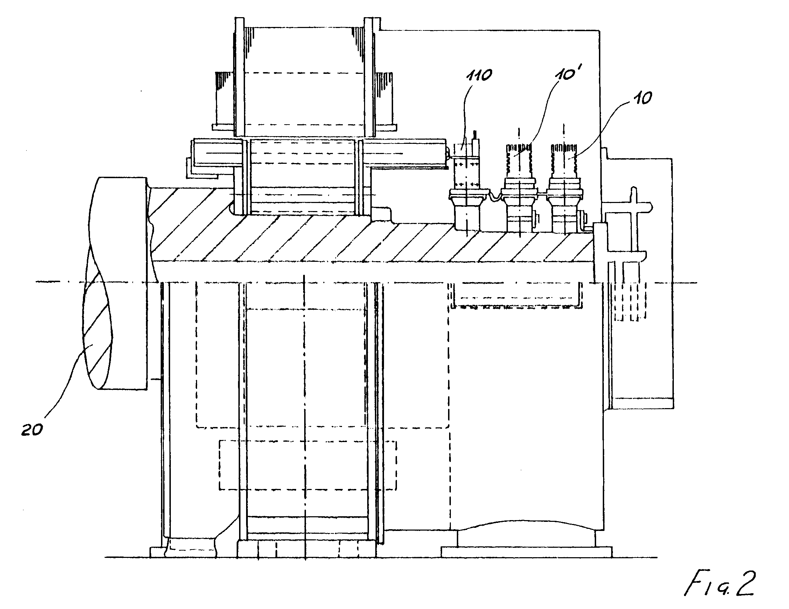

With reference to figure 2, only the components forming the subject-matter of the invention will be described in detail, since the general arrangement of a rotating-diode exciter alternator is well-known. Three disks can be seen in figure 2, indicated as 10, 10' and 110, located on the end of the shaft 20.

The disks 10 and 10' are identical. The orientation of the diodes 30 and 30', on the other hand, located in the axial openings 40 in the ring-shaped rim 50 of the disks 10 and 10', differs. The disk 110 serves to house the fuses 130 in axial openings which differ from the openings 40 solely because the fuses are sized and shaped differently from the diodes 30, 30'.

Apart from this, the manner in which the diodes 30, 30', on the one hand, and the fuses 130, on the other, are supported is the same; similarly, the manner in which said diodes are assembled and disassembled remains the same, and therefore reference will be made below only to the disk 10 and to the diodes 30. The disks 10, 10' and 110 are keyed onto the shaft 20 in any suitable manner. They are equipped with axial openings 40, clearly visible in the figures, of an approximately square shape but with large circular fitting. The radially internal edge 41 and the radially external edge 42 of the openings 40 act as striking surfaces for the diodes 30 which on one side, externally, rest on the edge 42 and on the other, internally, rest elastically against the edge 41.

For this purpose, on the inside edge 41 of each opening 40, there is a pack of Belleville washers 43, fitted onto a centering spigot 44 which is radially mobile inside a corresponding slot. On the Belleville washers 43 there rests a thrust plate 45 fitted with guiding edges which define and ensure its axial position in relation to the disk 10. Between the diode 30 and the thrust plate 45 there is an axial plate 46 for electrical connection between the various diodes of adjacent disks. Said electrical connection plate 46 is also located between the overhead protection 47 and the resting plate 48. As a consequence of this arrangement, the diode 30 is pushed against the radially external side 42 of the opening 40 by the Belleville washers 43.

According to the invention, a special tool, described below, is required for fitting and removing the diodes 30.

Above the openings 40, the disk 10 has a series of circular ribs 50, the purpose of which is to increase the heat exchanging surface. These surfaces are located on the two axial faces of the disk 10. Other circular ribs 51, having the same purpose, are located on the outer edge of the disk 10. For assembly and disassembly of the diodes 30, on the outer cylindrical surface 60 of the disk 10, there are axial dovetail grooves 61, distributed evenly in a circle. Each of these grooves 61 is located in a central position between two adjacent axial openings 40.

In positions corresponding to each axial opening 40 there are two parallel holes 62 passing through the whole external outer rim of the disk 10, and leading to its outer cylindrical surface 60. Into this pair of parallel holes 62, it is possible to insert two thrust pins 63 which are fixed on their upper ends to a cross-member 64, for example by forced screwing. In a central position, said cross-member 64 has a through hole 65 for a screw 70 fitted with a hexagonal head 71. The two pins 63 cross, by means of through holes 75, a fixing bridge 72 equipped with legs 73 ending in feet 74, the shape of which is complementary to the grooves 61 in which they are inserted.

The fixing bridge 72 is also equipped with a central threaded hole 76 in which the screw 70 can be screwed. The radially internal ends of the thrust pins 63 rest on the ends of the thrust plate 45; consequently, when the screw 70 is screwed into the threaded hole 76, the thrust pins 63 push the thrust plate 45 radially inwards, overcoming the elastic action of the Belleville washers 43. The diode 30 can thus be easily removed. To fit the diode 30 the operation is reversed. Obviously this equipment for fitting and removing the diodes 30, 30' and the fuses 130 is taken out during normal operation of the alternator.

The solution according to the invention avoids structural dicontinuities between the disk and the containment elements of the diode and fuse respectively, allow the speed limitations to be eliminated and make it possible to greatly increase the current level which can be rectified by the single diode.

Each disk is designed to house more than one parallel diode, and since two different disks are required in correspondence with the positive terminal and with the negative terminal of the field winding of the main machine, the rectifier bridge in its fullest configuration will use three disks, the third of which is for the fuses 130 which are fitted using the same system as the diodes 30 and 30'. This modular solution simplifies the design, makes construction easier and facilitates maintenance operations.

## Claims

1. Supporting disk (10) for the rotating diodes (30) of an exciter alternator, of the type stiffly mounted on the shaft (20) of the alternator, characterised by the fact that said disk (10) has a series of axial through openings (40) distributed around the circumference, inside each of which there is a diode (30), residing directly on a first radial edge (41) of said opening (40) on one side, and on the second radial edge (42) of said opening, indirectly, by means of the interposition of precompressed elastic means (43), on the other.

2. Supporting disk (10) for the rotating diodes (30) of an exciter alternator, according to the foregoing claim, characterised by the fact that in each of said openings (40), between said diodes (30) and one of the radially opposite edges (41, 42), there is a thrust plate (45), and between said thrust plate and the radial edge adjacent to the axial opening there is a series of Belleville washers (43).

3. Supporting disk (10) for the rotating diodes (30) of an exciter alternator according to the foregoing claims, characterised by the fact that said thrust plate (45) protrudes circumferentially from the two sides of the diode (30); in which the ring-shaped rim of the disk radially external to said axial openings (40) is fitted with pairs of parallel through holes (62) for thrust pins (63) suitable for pressing the thrust plate (45), overcoming the action of the Belleville washers (43) to allow the diode (30) to be fitted and removed respectively.

4. Supporting disk (10) for the rotating diodes (30) of an exciter alternator, according to the foregoing claims, characterised by the fact that said thrust pins (63) are connected at the top to a cross-member (64) for simultaneous control of said thrust pins.

5. Supporting disk (10) for the rotating diodes (30) of an exciter alternator, according to claims 3 and 4 above, characterised by the fact that the outer cylindrical surface (60) of the disk (10) is fitted with axial dovetailed grooves (61) which house the feet (74), having a complementary shape, of a fixing bridge (72) equipped with through holes (75) for the thrust pins (63) and a threaded central hole (76) for a screw (70) which passes freely through the cross-member (64).

## Patentansprüche

1. Trägerscheibe (10) für die umlaufenden Dioden (30) einer Wechselstromerregermaschine, wobei die Trägerscheibe (10) auf der Welle (20) der Wechselstrommaschine fest montiert ist, **dadurch gekennzeichnet,** daß die Scheibe (10) eine Reihe von über ihren Umfang verteilten durchgehenden axialen Öffnungen (40) besitzt, in denen jeweils eine Diode (30) angeordnet ist, die mit einer Seite direkt auf einer ersten radialen Kante (41) der Öffnung (40) und mit der anderen Seite unter Zwischenfügung von vorkomprimierten elastischen Mitteln (43) indirekt auf der zweiten radialen Kante (42) der Öffnung aufliegt.

2. Trägerscheibe (10) für die umlaufenden Dioden (30) einer Wechselstromerregermaschine nach dem vorhergehenden Anspruch, dadurch gekennzeichnet, daß in jeder der genannten Öffnungen (14) zwischen der Diode (30) und einer der in radialer Richtung einander gegenüberliegenden Kanten (41, 42) eine Druckplatte (45) angeordnet ist und daß zwischen dieser Druckplatte und der benachbarten radialen Kante der axialen Öffnung eine Reihe von Belleville-Federn (43) angeordnet ist.

3. Trägerscheibe (10) für die umlaufenden Dioden (30) einer Wechselstromerregermaschine nach den vorhergehenden Ansprüchen, dadurch gekennzeichnet, daß die Druckplatte (45) in Umfangsrichtung über die zwei Seiten der Diode (30) vorsteht, daß der außerhalb der genannten axialen Öffnungen (14) liegende ringförmige Kranz der Trägerscheibe Paare von durchgehenden parallelen Bohrungen (62) zur Aufnahme von Druckstäben (63) aufweist, mittels derer die Wirkung der Belleville-Federn (43) durch Druckausübung auf die Druckplatte (45) überwunden werden kann, um das Einsetzen bzw. Herausnehmen der Diode (30) zu ermöglichen.

4. Trägerscheibe (10) für die umlaufenden Dioden (30) einer Wechselstromerregermaschine nach den vorhergehenden Ansprüchen, dadurch gekennzeichnet, daß die Druckstäbe (63) an ihrer Oberseite mit einem Querglied (64) für die gleichzeitige Betätigung der Druckstäbe (63) verbunden sind.

5. Trägerscheibe (10) für die umlaufenden Dioden (30) einer Wechselstromerregermaschine nach Anspruch 3 und 4, dadurch gekennzeichnet, daß die zylindrische Außenfläche (60) der Trägerscheibe (10) axiale Schwalbenschwanznuten (61) aufweist, die komplementär ausgebildete Füße einer Befestigungsbrücke (72) aufnehmen, die durchgehende Bohrungen (75) für die Druckstäbe (63) und eine zentrale Gewindebohrung (76) für einen Schraubenbolzen (70) aufweist, der durch das Querglied (64) frei hindurchtritt.

## Revendications

1. Disque de support (10) pour les diodes rotatives (30) d'un alternateur excitateur, du type monté rigidement sur l'arbre (20) de l'alternateur, caractérisé par le fait que ledit disque (10) présente une série d'ouvertures axiales de traversée (40) réparties sur son pourtour, une diode (30) étant disposée à l'intérieur de chacune de ces ouvertures de manière à reposer directement, d'un côté, sur un premier bord de limitation radiale (41) de ladite ouverture (40) et indirectement, de l'autre côté, avec interposition de moyens élastiques précomprimés (43) sur le deuxième bord de limitation radiale (42) de ladite ouverture.

2. Disque de support (10) pour les diodes rotatives (30) d'un alternateur excitateur selon la revendication précédente, caractérisé par le fait qu'une plaque de poussée (45) est disposée dans chacune desdites ouvertures (40), entre lesdites diodes (30) et l'un des bords de limitation radiale opposés (41, 42), une série de rondelles Belleville- (43) étant disposée entre ladite plaque de poussée (45) et le bord de limitation radiale de l'ouverture axiale voisin de la plaque.

3. Disque de support (10) pour les diodes rotatives (30) d'un alternateur excitateur selon les revendications précédentes, caractérisé par le fait que ladite plaque de poussée (45) dépasse la diode (30) en direction périphérique d'un côté et de l'autre, la bordure annulaire du disque située à l'extérieur desdites ouvertures axiales en direction radiale étant munie de paires de trous parallèles de traversée (62) pour des tiges de poussée (63) adaptées à exercer une pression sur la plaque de poussée (45), en dépassant l'action des rondelles Belleville (43) pour permettre la mise en place ainsi que l'enlèvement de la diode (30).

4. Disque de support (10) pour les diodes rotatives (30) d'un alternateur excitateur selon les revendications précédentes, caractérisé par le fait que lesdites tiges de poussée (63) sont reliées à leur partie supérieure à un élément transversal (64) pour effectuer une commande simultanée desdites tiges de poussée.

5. Disque de support (10) pour les diodes rotatives (30) d'un alternateur excitateur selon les revendications 3 et 4 ci-dessus, caractérisé par le fait que la surface cylindrique extérieure (60) du disque (10) est munie de rainures axiales (61) en queue d'aronde pour le logement des pattes (74), de forme conjuguée, d'un étrier de fixation (72) muni de trous de traversée (75) pour les tiges de poussée (63) et d'un trou taraudé central (76) pour une vis (70) traversant librement l'élément transversale (64).
